# EUROPEAN PATENT SPECIFICATION

(11) **EP 2 447 138 B1**
(45) Date of publication and mention of the grant of the patent: **19.11.2014**
(21) Application number: 11183215.0
(22) Date of filing: 29.09.2011
(51) Int. Cl.: B62J 17/02, B62J 17/04, B62J 37/00, B62K 11/04, B62J 1/12

(54) **Rear structure for saddle-type vehicles**
Rückseitenstruktur für Sattelfahrzeuge
Structure arrière pour véhicule à monture de selle

(30) Priority: 29.10.2010 JP 2010244218
(43) Date of publication of application: 02.05.2012
(73) Proprietor: Honda Motor Co., Ltd., Tokyo 107-8556 (JP)
(72) Inventor: Nishijima, Tomoki, Saitama, 351-0193 (JP); Nakano, Nobuhiko, Saitama, 351-0193 (JP)
(74) Representative: Rupp, Christian

(56) References cited:
- EP-A2- 1 754 657
- JP-A- 2003 252 266

## Description

The present invention relates to a rear structure for a saddle-type vehicle having a seat.

### [Background Art]

Heretofore, there has been disclosed a rear structure for a motorcycle (saddle-type vehicle) includes a seat hook (lock lever) on a seat bottom plate, which is inserted through a lock hole defined in a cross member of a seat rail to lock the seat on a seat catch (see, for example, Patent Document 1). According to Patent Document 1, the seat bottom plate has an upstanding positioning land (positioning boss) near the seat hook, and the cross member of the seat rail has an engaging hole defined therein for the positioning land to engage in. With this structure, the seat is locked by the seat hook and the seat catch, and is positioned in forward, rearward, leftward, and rightward directions by the positioning land engaging in the engaging hole.

Japanese Patent Laid-Open No. 2003-252266

EP 1 754 657 A2 discloses a rear structure for a saddle-type vehicle according to the preamble of claim 1.

With the above conventional structure, if the seat bottom plate is low in rigidity, then when a large upward load is applied to a rear portion of the seat, the seat may possibly turn upwardly, causing only the positioning land to be pulled out of the engaging hole. It is thus necessary to increase the rigidity of the seat bottom plate with ribs provided on the seat bottom plate. However, the ribs on the seat bottom plate make the seat thicker, slightly lowering the ability to place the rider's feet on the ground. Consequently, it is important to prevent the positioning land on the seat bottom plate from being released from the engaging hole without the need for increasing the thickness of the seat bottom plate.
The present invention has been made in view of the above problems. It is an object of the present invention to provide a rear structure for a saddle-type vehicle which prevents a positioning land on a seat bottom plate from being removed from an engaging hole without the need for increasing the thickness of the seat bottom plate.

To achieve the above object, there is provided in accordance with the present invention a rear structure for a saddle-type vehicle which includes a seat (50) including a seat skin layer (52), a cushion (53), and a seat bottom plate (54), and a seat rail (8) disposable in a rear portion of a vehicle frame (F), for bearing a load from the seat (50), the seat bottom plate (54) including a seat hook (60) and a positioning land (65) which project downwardly, and the seat rail (8) including a seat hook insertion hole (96) for inserting the seat hook (60) therein, a seat catch (97) for locking the seat hook (60), and an engaging hole for engaging the positioning land (65), characterised in that the positioning land (65) of the seat bottom plate (54) is integral with a front portion or rear portion of the seat hook (60), and the engaging hole is provided as the seat hook insertion hole (96) for the seat catch (97).
With the above arrangement, since the positioning land integral with the seat hook engages in the engaging hole which is provided as the seat hook insertion hole on the side of the seat rail, the positioning land is inserted, together with the seat hook, in the seat hook insertion hole and locked by the seat catch. The positioning land is thus prevented from being removed without the need for ribs or the like on the seat bottom plate. The positioning land on the seat bottom plate is prevented from being removed from the engaging hole without the need for an increase in the thickness of the seat bottom plate. The positioning land also serves to reinforce the seat hook for increased rigidity.

In the above arrangement, the seat rail (8) may be provided as a pair of left and right seat rails (8, 8), the seat catch (97) may be disposed on a cross member (90) extending between the left and right seat rails (8, 8), and the seat hook (60) and the seat catch (97) may be offset to one of left and right sides of a central line (C) in the widthwise directions of the vehicle.
Even though the seat hook and the seat catch are offset to one of the left and right sides of the central line, i.e., even though the seat is liable to be lifted from the other of the left and right sides, the positioning land is prevented from being removed from the engaging hole without the need for an increase in the thickness of the seat bottom plate.

The seat catch (97) may be disposed beneath the cross member (90) and may include a catch body (99) and a cable (100), and an inspection window (95) may be provided centrally between the seat rails (8, 8) in the widthwise directions of the vehicle.
The assembled states of the catch body and the cable which are disposed below the cross member can be inspected through the inspection window which is defined centrally in the widthwise directions of the vehicle.

The seat hook (60) may include a front leg (61), a rear leg (62), and a joint (63) interconnecting the front leg (61) and the rear leg (62), the front leg (61) and the rear leg (62) including reinforcing ribs (61A, 62A), respectively, which are integral with the rear bottom plate (54).
Since the rigidity of the seat hook is increased by the reinforcing ribs of the front leg and the rear leg, the positioning land is prevented from being removed from the engaging hole.
Furthermore, the seat bottom plate (54) may include a pair of left and right teeth (59, 59) extending in front-and-rear directions, and the left and right seat rails (8, 8) may include a pair of left and right frame-shaped stays (87, 87) which are open in the front-and-rear directions, the teeth (59, 59) being engaged by the left and right frame-shaped stays (87, 87), and the frame-shaped stays (87) may include guide walls (87A, 87A) contiguous to rear portions of outer side surfaces of frames of the left and right frame-shaped stays (87, 87) and extending in the front-and-rear directions.
While the teeth of the seat bottom plate are being guided by the guide walls that are contiguous to the rear portions of the outer sides, in the widthwise directions of the vehicle, of the frames of the stays, the teeth can engage the stays.

The saddle-type vehicle may include an engine (2) having a radiator reservoir tank (32) disposed on an outer side of one of the seat rails (8, 8), and the radiator reservoir tank (32) may include a cap (32B) disposed on an outer side of one of the guide walls (87A).
Inasmuch as the cap of the radiator reservoir tank is disposed on the outer side of the guide wall, the guide wall prevents the teeth of the seat bottom plate from contacting the cap.

With the rear structure for the saddle-type vehicle according to the present invention, the positioning land on the seat bottom plate is inserted, together with the seat hook, in the seat hook insertion hole, and locked by the seat catch. The positioning land is thus prevented from being removed without the need for ribs or the like on the seat bottom plate. The positioning land is thus prevented from being removed from the engaging hole without the need for an increase in the thickness of the seat bottom plate. The positioning land also serves to reinforce the seat hook for increased rigidity.
Even though the seat is liable to be lifted from the other of the left and right sides, the positioning land is prevented from being removed from the engaging hole without the need for an increase in the thickness of the seat bottom plate.

The assembled states of the catch body and the cable which are disposed below the cross member can be inspected through the inspection window which is defined centrally in the widthwise directions of the vehicle.
Since the rigidity of the seat hook is increased by the reinforcing ribs of the front leg and the rear leg, the positioning land is prevented from being removed from the engaging hole.

While the teeth of the seat bottom plate are being guided by the guide walls that are contiguous to the rear portions of the outer sides, in the widthwise directions of the vehicle, of the frames of the stays, the teeth can engage the stays.
Inasmuch as the cap of the radiator reservoir tank is disposed on the outer side of the guide wall, the guide wall prevents the teeth of the seat bottom plate from contacting the cap.
Fig. 1 is a left side elevational view of a motorcycle according to an embodiment of the present invention.
Fig. 2 is a left side elevational view of a rear structure of the motorcycle which includes a seat.
Fig. 3 is a side elevational view of a seat rail.
Fig. 4 is a plan view of the seat rail.
Fig. 5 is a plan view of the rear structure of the motorcycle.
Fig. 6 is a left side elevational view of the seat.
Fig. 7 is a bottom view of the seat.
Fig. 8 is a perspective view of a portion near a seat hook as viewed from below.
Fig. 9 is a plan view of the rear structure of the motorcycle.
Fig. 10 is a sectional side elevational view of the rear structure of the motorcycle.
Fig. 11 is a right side elevational view of the motorcycle.
Fig. 12 is a perspective view of exhaust pipes and neighboring parts as viewed from a viewpoint rightward and forward of the vehicle.
Fig. 13 is a front elevational view of the exhaust pipes and neighboring parts as viewed from a viewpoint forward of the vehicle.
Fig. 14 is a front elevational view of a structure around front cowls and a headlight.
Fig. 15 is a perspective view of a front portion of the vehicle as viewed from a viewpoint rearward of the vehicle.

A rear structure of a motorcycle according to an embodiment of the present invention will be described below with reference to the drawings. In the description which follows, the terms "upper," "lower," "front," "rear," "left," "right," and other similar directional expressions represent directions as viewed from the driver of the vehicle.

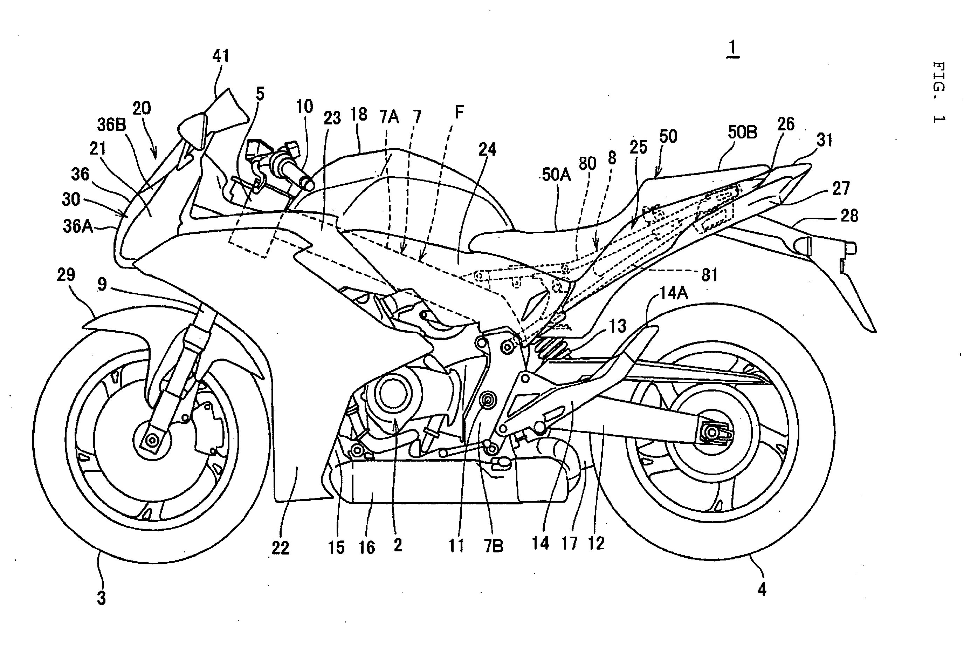

Fig. 1 is a left side elevational view of a motorcycle according to an embodiment of the present invention.
A motorcycle 1 (saddle-type vehicle) is a saddle-type vehicle which includes an engine 2 mounted substantially centrally therein with respect to front-and-rear directions of the vehicle, a front wheel 3 disposed in front of the engine 2, and a rear wheel 4 disposed behind the engine 2.
The motorcycle 1 has a vehicle frame F including a head pipe 5 disposed in a front portion of the vehicle, a pair of left and right main frames 7 extending rearwardly and downwardly from the head pipe 5, and a seat rail 8 extending rearwardly and upwardly from a rear portion of the main frame 7 into a rear portion of the vehicle.
Each of the main frames 7 includes a main tube 7A extending rearwardly and downwardly from a rear portion of the head pipe 5, and a central tube 7B bent downwardly from a rear end of the main tube 7A.

A pair of left and right front fork members 9 are supported on the head pipe 5 by a steering shaft (not shown). The front wheel 3 is rotatably supported on lower portions of the front fork members 9. A steering handle 10 is mounted on upper portions of the front fork members 9.
A swing arm 12 is swingably supported on the central tube 7B by a pivot shaft 11 which extends in the widthwise directions of the vehicle. The rear wheel 4 is supported on a rear portion of the swing arm 12. A rear suspension 13 is connected between the swing arm 12 and the main frames 7. A pair of left and right pillion step stays 14 which support pillion steps 14A are mounted on a rear portion of the central tube 7B.

The engine 2 is supported beneath the main frames 7. The engine 2, which is a water-cooled in-line four-cylinder engine, has four exhaust pipes 15 extending from respective cylinders downwardly of the engine 2 and joined together to a box-shaped chamber 16 that is disposed below the engine 2. A muffler 17 which is disposed on the right side of the rear wheel 4 is connected to a rear portion of the chamber 16. The rear wheel 4 is driven by a chain (not shown) which is trained around and extends between the output shaft of the engine 2 and the rear wheel 4.

A fuel tank 18 is supported above the main tube 7A, and a seat 50 for the rider of the motorcycle 1 to sit on extends contiguous to and extending rearwardly from a rear portion of the fuel tank 18. The seat 50 is supported on the seat rail 8. The seat 50 is a double seat including two seats, i.e., a front seat 50A for the rider to sit on and a rear seat 50B for a passenger to sit on.

The motorcycle 1 has a vehicle body cover 20 of resin. The vehicle body cover 20 includes a front cowl 21 covering a front portion of the head pipe 5, a front side cowl 22 contiguous to and extending rearwardly and downwardly from the front cowl 21 and covering a front portion of the engine 2, an upper cowl 23 disposed above the front side cowl 22, a middle cowl 24 contiguous to the upper cowl 23 and covering a lower portion of the fuel tank 18, a rear cowl 25 contiguous to the middle cowl 24 and covering a side portion of the seat rail 8, and a tail cowl 31 contiguous to a rear portion of the rear cowl 25. The front cowl 21, the front side cowl 22, the upper cowl 23, the middle cowl 24, and the rear cowl 25 are each provided as a pair of left and right cowls on both sides of the vehicle.
A rear fender 28 which covers the rear wheel 4 from above is mounted on the lower surface of a rear portion of the rear cowl 25. A front fender 29 is provided on the front fork 9. A head light 30 is mounted on a front surface of the front cowl 21.

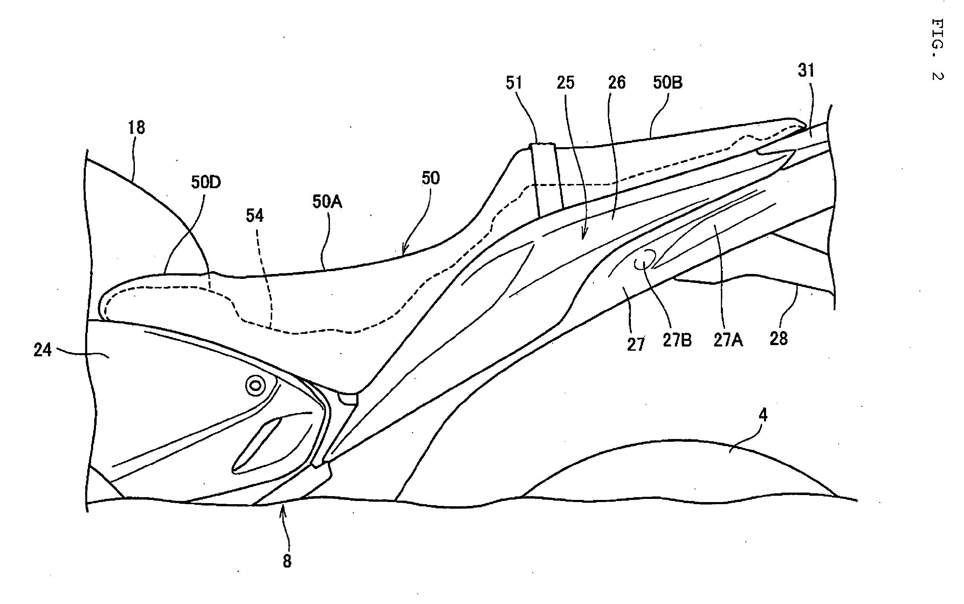

Fig. 2 is a left side elevational view of a rear structure of the motorcycle 1 which includes the seat 50.
As shown in Fig. 2, the rear cowl 25 is vertically divided into an upper rear cowl 26 extending along the lower edge of the seat 50 and a lower rear cowl 27 positioned beneath the upper rear cowl 26. The lower rear cowl 27 includes grips 27A provided as upward recesses defined in surfaces of the lower rear cowl 27 below the rear seat 50B. The passenger who sits on the rear seat 50B grips the grips 27A by hands and places its feet on the pillion steps 14A. A belt 51 which can be gripped by the passenger is disposed on the upper surface of a front portion of the rear seat 50B.

The lower rear cowl 27 has a key insertion hole 27B defined therein adjacent to one of the grips 27A for the insertion of a vehicle key therein. The seat 50 is detachably mounted on the seat rail 8. When the vehicle key is inserted into the key insertion hole 27B and is operated for an unlocking action, the seat 50 is unlocked from the seat rail 8 for removal therefrom.

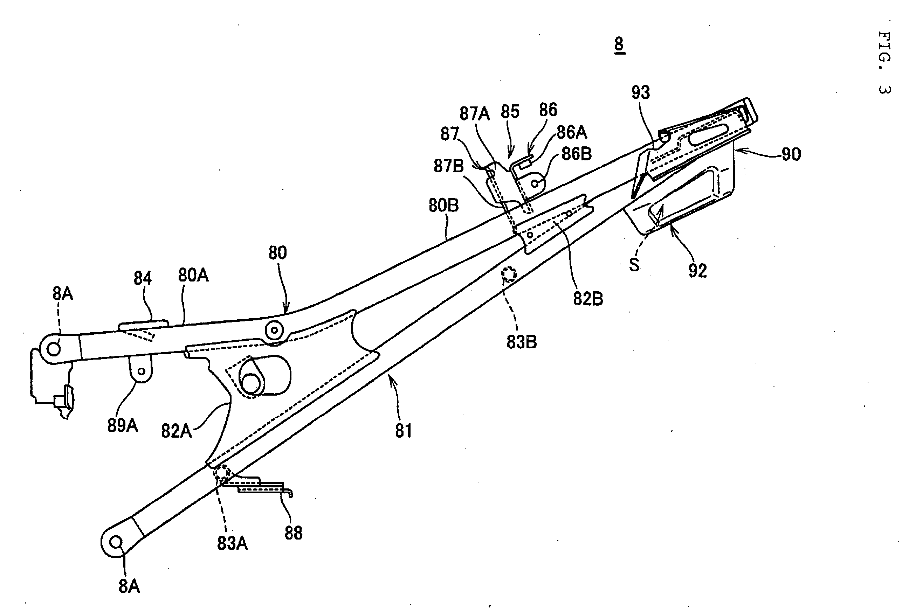

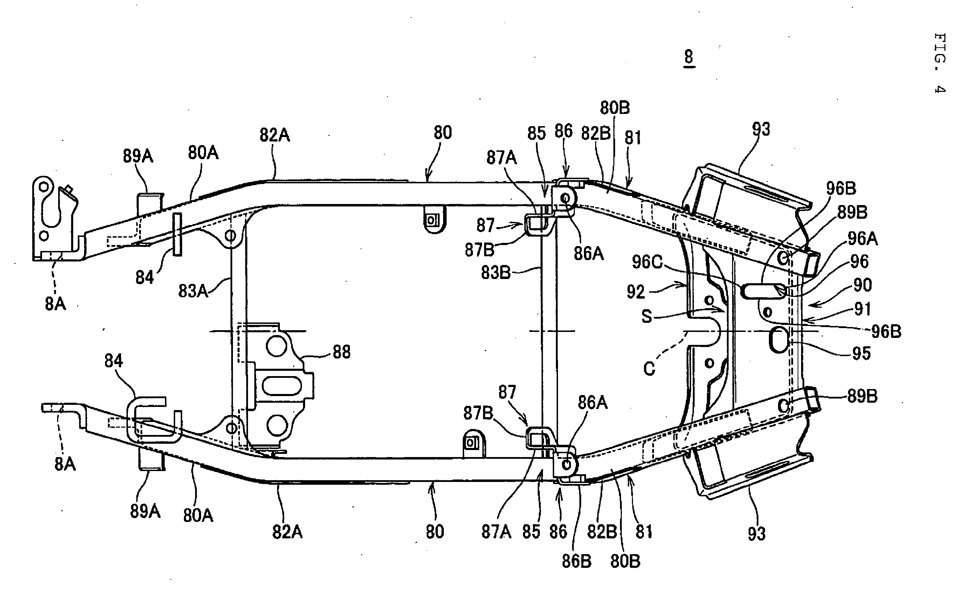

Fig. 3 is a side elevational view of the seat rail 8. Fig. 4 is a plan view of the seat rail 8.
As shown in Figs. 1, 3, and 4, the seat rail 8 includes a main pipe 80 extending rearwardly from a rear portion of the main tube 7A and an auxiliary pipe 81 extending rearwardly and upwardly from the center tube 8B and joined to a rear portion of the main pipe 80. The seat rail 8 includes a frame for bearing the load applied to the seat 50.

The main pipe 80 includes a pipe having a rectangular cross section which includes a horizontal portion 80A extending substantially horizontally below the front seat 50A and a slanted portion 80B bent rearwardly and upwardly from a rear portion of the horizontal portion 80A. A front gusset 82A and a rear gusset 82B, each in the form of a plate, interconnecting the main pipe 80 and the auxiliary pipe 81, are mounted respectively on front and rear portions of the seat rail 8. Cowl fastening members 89B are provided on the upper surfaces of rear portions of the slanted portions 80B.
Bolt holes 8A are defined in the front ends of the main pipe 80 and the auxiliary pipe 81. The seat rail 8 is fastened to the rear portion of the main frame 7 by bolts (not shown) inserted through the bolt holes 8A. Cowl fastening members 89A for fastening the middle cowl 24 thereto are provided on the lower surface of the horizontal portion 80A.

As shown in Fig. 4, the seat rail 8 is provided as a pair of left and right seat rails. A front cross pipe 83A and a rear cross pipe 83B which interconnect the left and right seat rails 8 extend between the left and right auxiliary pipes 81. A stay 88 which supports an ABS unit (not shown) for controlling the brakes of the front wheel 3 and the rear wheel 4 is mounted on the front cross pipe 83A.

Seat rail hooks 84 in the shape of frames are mounted on upper surfaces of the left and right horizontal portions 80A in front portions of the main pipes 80. Seat hook stays 85 which project upwardly are mounted on the left and right slanted portions 80B in rear portions of the main pipes 80. The seat 50 is engaged by the seat rail hook 84 and the seat hook stays 85.

The seat hook stays 85 include upright brackets 86 mounted on upper surfaces of the slanted portions 80B and frame-shaped stays 87 (stays in the shape of frames) projecting inwardly in the widthwise directions of the vehicle from side portions of the brackets 86.
The brackets 86 have cowl fastening members 86A on upper surfaces thereof and reservoir tank fastening members 86B on outer side surfaces thereof in the widthwise directions of the vehicle.
The frame-shaped stays 87 have frame-shaped hooks 87B extending in the widthwise directions of the vehicle and guide walls 87A contiguous to and bent rearwardly from rear portions of outer side surfaces of the frame-shaped hooks 87B in the widthwise directions of the vehicle.
The frame-shaped hooks 87B are in the shape of frames which are open in the front-and-rear directions of the vehicle, and are positioned inwardly of the slanted portions 80B in the widthwise directions of the vehicle. The guide walls 87A are in the form of plates extending in the front-and-rear directions of the vehicle, and are joined to inner sides of the brackets 86.

As shown in Fig. 4, the seat rails 8 are bent inwardly in the widthwise directions of the vehicle and the spacing between the seat rails 8 is progressively smaller rearwardly behind the rear cross pipe 83B. A cross member in the form of a plate which interconnects the rear ends of the seat rails 8 is mounted on the seat rails 8. The cross member 90 includes an upper cross member 91 in the form of a plate which extends between and is welded to the left and right main pipes 80, and a lower cross member 92 in the form of a plate which extends between and is welded to the left and right auxiliary pipes 81. The lower cross member 92 protrudes downwardly from lower surfaces of the auxiliary pipes 81, with a space S defined between the upper cross member 91 and the lower cross member 92.
Side plates 93 which extend outwardly in the widthwise directions of the vehicle are joined to the left and right outer side surfaces of rear portions of the seat rails 8.

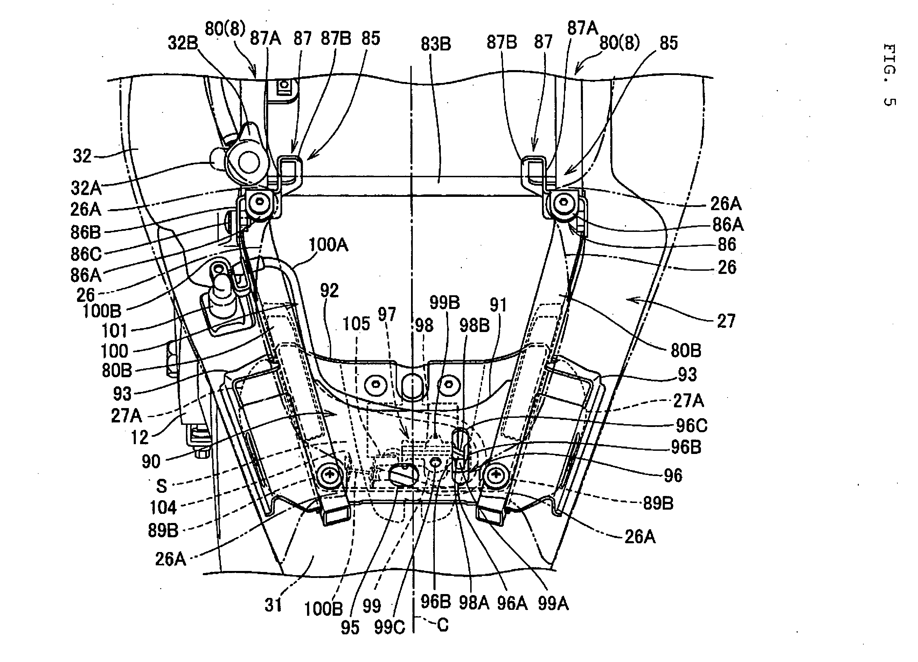

Fig. 5 is a plan view of the rear structure of the motorcycle 1. In Fig. 5, the rear structure of the motorcycle 1 is illustrated with the seat 50 removed, and the upper rear cowls 26 and the tail cowl 31 are indicated by the two-dot-and-dash lines.
As shown in Fig. 5, the lower rear cowl 27 is of an integral structure covering the seat rails 8 from below. The upper rear cowls 26 are contiguous to side edges of the lower rear cowl 27 and are divided into left and right cowls covering outer sides of the left and right seat rails 8. The left and right upper rear cowls 26 have a plurality of fastening members 26A extending to upper surfaces of the main pipes 80, and are fastened to the seat rails 8 by the fastening members 26A that are fastened to the cowl fastening members 86A and 89B.
The grips 27A of the lower rear cowl 27 are borne by the lower surfaces of side plates 93 which are positioned above the grips 27A. Therefore, the grips 27A maintain their rigidity and strength.

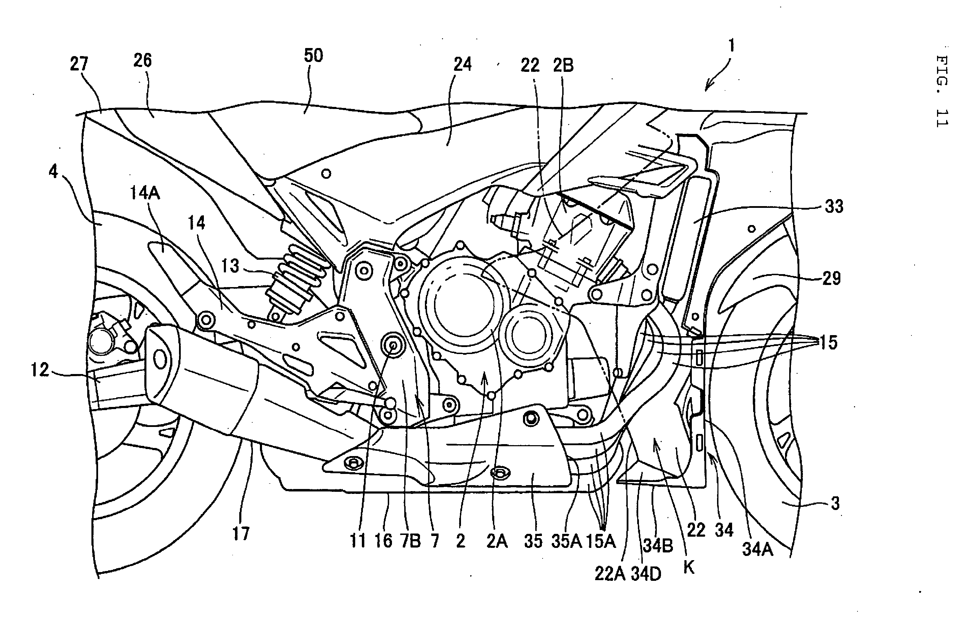

A reservoir tank 32 (radiator reservoir tank), which extends front-and-rear directions of the vehicle, is disposed in a space defined between the upper rear cowl 26 and the lower rear cowl 27 on an outer side of the left seat rail 8. The reservoir tank 32 is connected to a radiator 33 (see Fig. 11) which is disposed in front of the engine 2, and stores a portion of a coolant for the engine 2.
The reservoir tank 32 includes an inlet 32A extending upwardly of the slanted portion 80B and a cap 32B closing the inlet 32A. The reservoir tank 32 is disposed adjacent to the left seat hook stay 85, and is fastened to the left seat hook stay 85 by a bolt 86C on the reservoir tank fastening member 86B. The cap 32B is disposed on an outer side of the guide wall 87A of the left seat hook stay 85.

The upper cross member 91 has an inspection window 95 defined therein which communicates with the space S below the upper cross member 91. The inspection window 95 is disposed centrally on the upper cross member 91 across a central line C in the widthwise directions (widthwise central line) of the vehicle between the seat rails 8. The central line C is aligned with the central line in the widthwise directions of the motorcycle 1.
The upper cross member 91 has a seat hook insertion hole 96 (engaging hole) extending in the front-and-rear directions of the vehicle. The upper cross member 91 is an oblong hole which communicates with the space S, and is offset to one side (right side in the present embodiment) of the central line C in the widthwise directions of the vehicle.

A seat catch 97 for locking the seat 50 to the seat rails 8 is fixedly mounted in the space S in the cross member 90. The seat catch 97 includes a slider 98 which is slidable in the widthwise directions of the vehicle, a catch body 99 supporting the slider 98 thereon, and a cable 100 for operating the slider 98 to slide.

The catch body 99 is in the form of a block extending in the widthwise directions of the vehicle, and is fixed to the lower surface of the upper cross member 91 in the space S. Specifically, the catch body 99 has an upwardly projecting positioning boss 99B engaged by the upper cross member 91 and a rear screw hole 99C through which the catch body 99 is screwed to the upper cross member 91. The catch body 99 has a hook 99A on one end which is exposed outwardly and upwardly from the seat hook insertion hole 96. The hook 99A is recessed downwardly in the shape of a hook.

The slider 98 includes a rod having a rectangular cross section which extends in the widthwise directions of the vehicle. The slider 98 is displaced in one of the widthwise directions of the vehicle and housed in the catch body 99 so as to be slidable in the widthwise directions of the vehicle. The slider 98 has on one distal end thereof a lock finger 98A projecting laterally in an upper portion of the hook 99A. The seat catch 97 is brought into a locking state for locking the seat 50 when the lock finger 98A of the slider 98 projects into the hook 99A of the catch body 99. Specifically, the slider 98 is normally biased to one side and positioned in the hook 99A by a helical spring (not shown) housed in a lower portion of the slider 98, normally locking the seat catch 97. When the lock finger 98A slides to the other side (left side), the seat 50 is unlocked. The lock finger 98A has an upper slanted surface 98B which is slanted downwardly toward its distal end.

According to the present embodiment, the spacing between the seat rails 8 is progressively smaller toward their rear portions. If the seat catch 97 is disposed at the rear portions of the seat rails 8, then it is difficult to place the seat catch 97 displaced to one side in the widthwise directions of the vehicle with the hook 99A aligned with the central line C. Therefore, the hook 99A and the seat hook insertion hole 96 are offset to one side in the widthwise directions of the vehicle which is spaced from the central line C.

A key cylinder 101 for operating the cable 100 is disposed behind the reservoir tank 32. The cable 100 is bent from the key cylinder 101, extends rearwardly along the main pipe 80 on the other side, then is bent toward the main pipe 80 on one side within the space S, is directed back around a side of the hook 99A toward the main pipe 80 on the other side, and reaches a position behind the seat catch 97. Specifically, the cable 100 includes a tubular outer tube 100A and a core 100B slidable in the outer tube 100A. The core 100B has an end connected to the key cylinder 101 and the other end fixed to a wire stay 104 disposed behind the main pipe 80 on the other side. The outer tube 100A has an end fixed to the key cylinder 101 and the other end connected to an end of the slider 98 via an L-shaped stay 105.

When the vehicle key is inserted into the key cylinder 101 through the key insertion hole 27B (see Fig. 2) and the key cylinder 101 is turned in a prescribed direction, the end of the core 100B is pulled toward the other side of the vehicle, moving the other end of the outer tube 100A toward the wire stay 104 to cause the slider 98, together with the other end of the outer tube 100A, to slide toward the other side.
The inspection window 95 of the upper cross member 90 is defined in the vicinity of the junction between the cable 100 and the slider 98. Therefore, the state of the junction between the cable 100 and the slider 98, including the stay 105, can be confirmed through the inspection window 95, making it possible to facilitate the assembling process and achieve good maintainability.

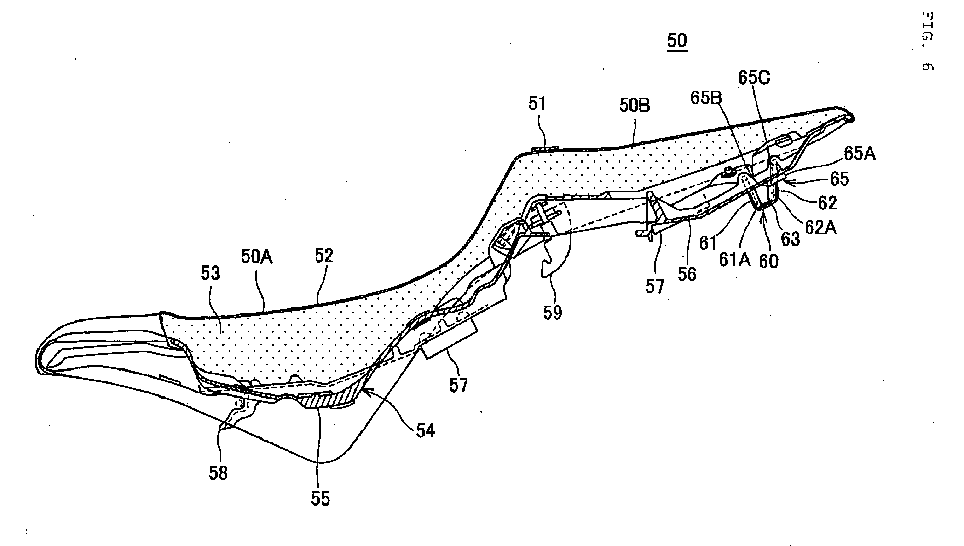

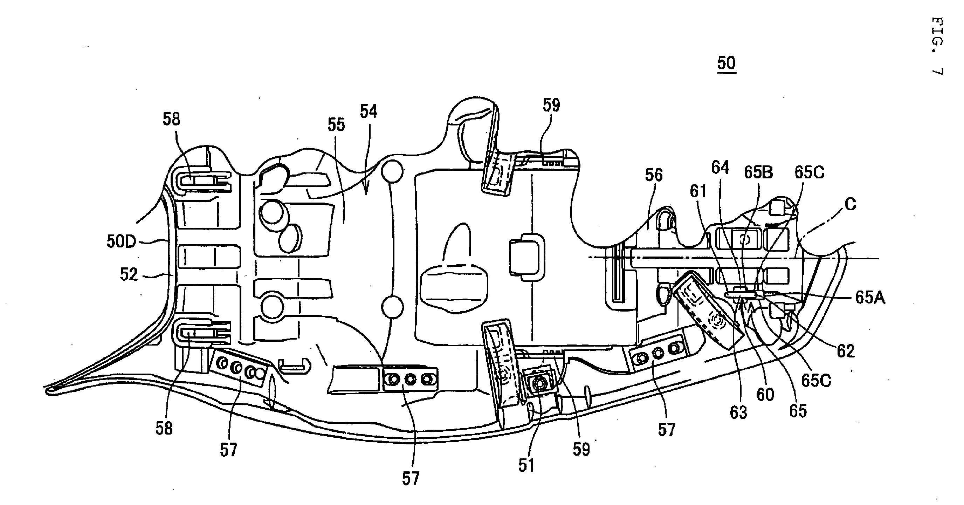

Fig. 6 is a left side elevational view of the seat 50. Fig. 7 is a bottom view of the seat 50. In Fig. 7, one side of the seat 50 in the widthwise directions of the vehicle is illustrated, whereas the other side is omitted from illustration.
As shown in Figs. 6 and 7, the seat 50 includes a seat skin layer 52 providing a surface of the seat 50, a cushion 53 of urethane covered with the seat skin layer 52, and a seat bottom plate 54 supporting the cushion 53 thereon.
The cushion 53 is of a stepped shape corresponding to the shapes of the front seat 50A and the rear seat 50B. The seat bottom plate 54, which is also of a stepped shape matching the shape of the cushion 53, includes a front bottom plate 55 providing a lower surface of the front seat 50A and a rear bottom plate 56 providing a lower surface of the rear seat 50B.
The seat 50 also includes a recess 50D defined in a front end thereof which is recessed rearwardly in complementary relation to the shape of a rear portion of the fuel tank 18 (see Fig. 2).

A plurality of elastic members 57 which are arranged along the front-and-rear directions of the vehicle are disposed on the lower surface of the seat bottom plate 54 for abutment against the upper surfaces of the main pipes 80 with the seat 50 installed in place.
The front bottom plate 55 has front teeth 58 on its lower surface for engaging in the frames of the seat rail hooks 84 (see Fig. 4) of the main pipes 80. The front teeth 58 are provided as a pair of left and right front teeth, and project obliquely forwardly and downwardly.
The rear bottom plate 56 has a pair of left and right rear teeth 59 (teeth) on its lower surface for engaging in the frames of the frame-shaped hooks 87B (see Fig. 4) on the slanted portions 80B. The rear teeth 59 are in the form of plates extending in the front-and-rear directions, and project obliquely forwardly and downwardly.

A seat hook 60 which projects downwardly is disposed on the lower surface of the rear bottom plate 56. The seat hook 60 is disposed rearwardly of the rear teeth 59, and is offset to one side of the central line C in the widthwise directions of the vehicle, in alignment with the seat hook insertion hole 96 (see Fig. 5). The seat hook 60 is inserted in the seat hook insertion hole 96 which is defined in the upper cross member 91, and is locked by the seat catch 97.

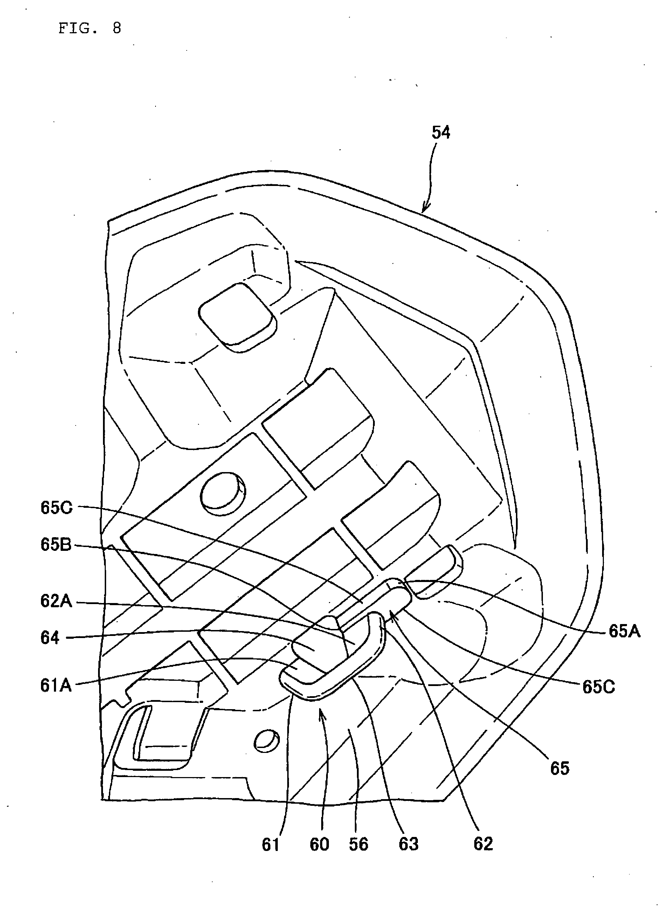

Fig. 8 is a perspective view of a portion near the seat hook 60 as viewed from below.
As shown in Figs. 6 through 8, the seat hook 60 is substantially U-shaped as viewed in side elevation. The seat hook 60 includes a front leg 61 extending downwardly from the rear bottom plate 56, a rear leg 62 disposed rearwardly of the front leg 61 and extending downwardly from the rear bottom plate 56, and a joint 63 interconnecting the lower end of the front leg 61 and the lower end of the rear leg 62 along the front-and-rear directions.
The seat bottom plate 54 is integrally molded of resin, and the seat hook 60 is insert-molded with the seat bottom plate 54 at the time it is molded of resin.

The front leg 61 and the rear leg 62 have on their inner edges reinforcing ribs 61A, 62A, respectively, which extend vertically along the front leg 61 and the rear leg 62. The reinforcing ribs 61A, 62A are integral with the rear bottom plate 56 and extend from the rear bottom plate 56 at the proximal ends of the front leg 61 and the rear leg 62 to the inner edge of the joint 63.
A clearance 64 which extends through the seat bottom plate 54 is defined between the reinforcing rib 61A and the reinforcing rib 62A.

A positioning land 65 which projects downwardly as a step from the rear bottom plate 56 is disposed at the proximal end of the rear leg 62. The positioning land 65 is formed integrally with the rear leg 62 at the time the seat bottom plate 54 is molded of resin, and is disposed on a rear portion of the seat hook 60.
The positioning land 65 is inserted, together with the seat hook 60, inserted in the seat hook insertion hole 96 (see Figs. 4 and 5) in the upper cross member 91. The positioning land 65 positions the seat 50 in the front-and-rear directions and the widthwise directions of the vehicle by fitting in the seat hook insertion hole 96. The seat hook 60 has its strength and rigidity increased by the positioning land 65.

The positioning land 65 is in the shape of a rectangle extending in the front-and-rear directions in complementary relation to the seat hook insertion hole 96. The positioning land 65 has a rear end 65A extending rearwardly of the rear leg 62 and a front end 65B positioned at a rear edge of the clearance 64. The rear end 65A is of an arcuate shape complementary to the seat hook insertion hole 96. The positioning land 65 has a width greater than the width of the rear leg 62, and the positioning land 65 has side surfaces 65C projecting beyond the side surfaces of the rear leg 62 in the widthwise directions of the vehicle.

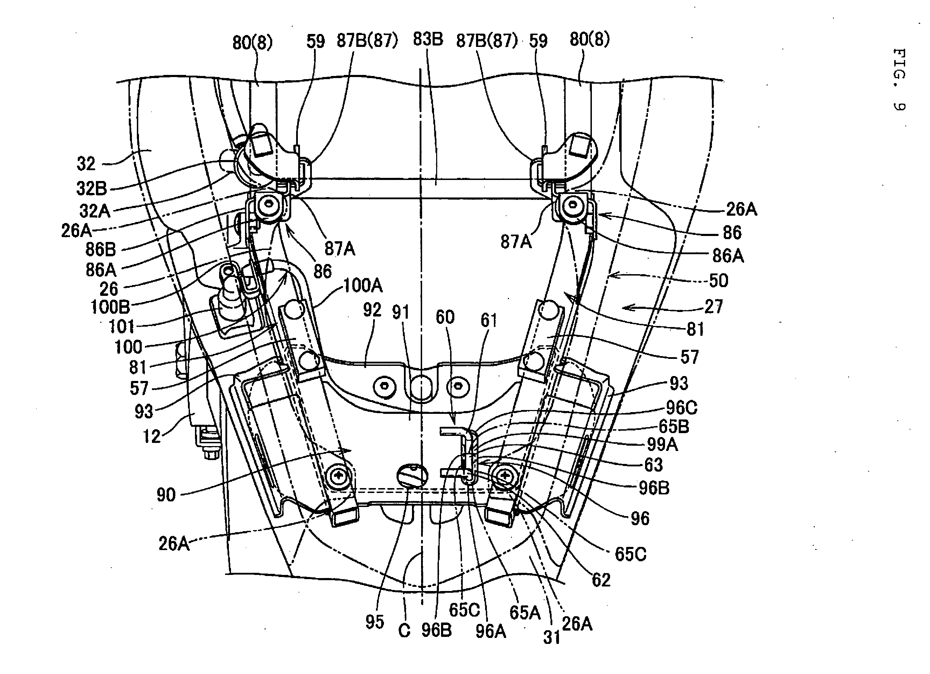

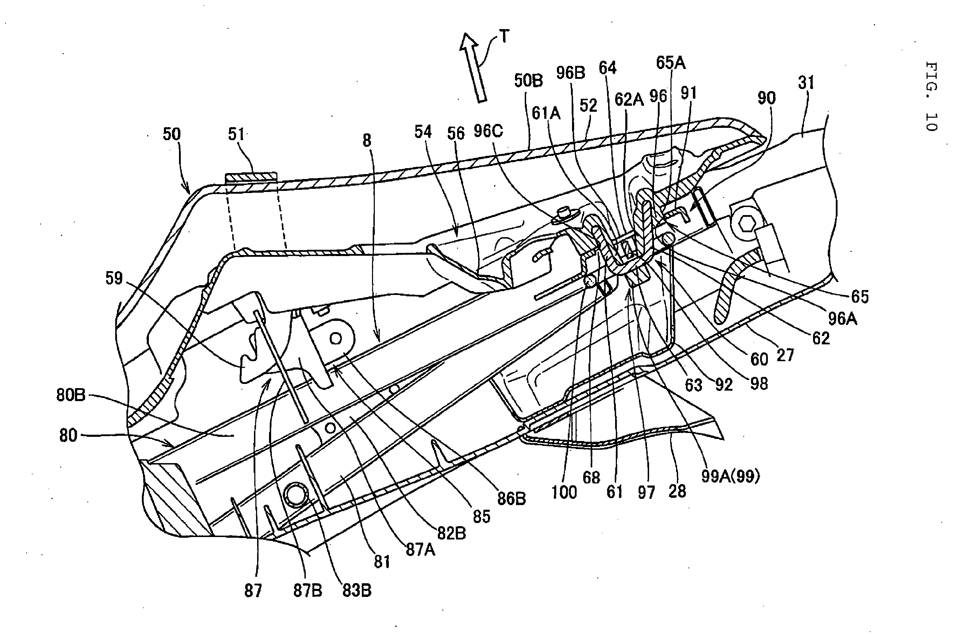

Fig. 9 is a plan view of the rear structure of the motorcycle 1. Fig. 10 is a sectional side elevational view of the rear structure of the motorcycle 1. In Fig. 9, the upper rear cowls 26, the tail cowl 31, and the seat 50 have their profiles indicated by the two-dot-and-dash lines. In Fig. 9, the rear teeth 59, the elastic members 57, and the seat hook 60 of the seat 50 are indicated by the solid lines, the positioning land 65 is indicated by the two-dot-and-dash lines, and the slider 98 is omitted from illustration. In Fig. 10, the cushion 53 is omitted from illustration.

With the seat 50 installed on the seat rails 8, the front teeth 58 (see Fig. 6) engage the seat rail hooks 84 (see Fig. 4) from behind, and, as shown in Figs. 9 and 10, the rear teeth 59 of the seat bottom plate 54 engage the frame-shaped hooks 87B of the seat rails 8 from behind. The seat 50 is prevented from moving in the forward direction of the vehicle because the front teeth 58 and the rear teeth 59 abut against and engage the seat rail hooks 84 and the frame-shaped hooks 87B, respectively, from behind.
The guide walls 87A of the seat hook stays 85 are positioned outwardly of the rear teeth 59 in the widthwise directions of the vehicle. During a process of installing the seat 50, the guide walls 87A limit the position of the seat 50 in the widthwise directions of the vehicle such that the rear teeth 59 are positioned within the guide walls 87A.

In the rear portion of the seat 50, the seat hook 60 is inserted, together with the positioning land 65, in the seat hook insertion hole 96 in the upper cross member 91, and engages and is locked by the hook 99A of the seat catch 97.
Specifically, the seat hook 60 is locked by the seat catch 97 when the joint 63 inserted in the seat hook insertion hole 96 engages between the lock finger 98A and the hook 99A. Thus, the rear portion of the seat 50 is made immovable upwardly, i.e., in a direction to remove the seat 50 from the seat rails 8. As the seat hook 60 abuts against the upper slanted surface 98B (see Fig. 5) of the lock finger 98A from above, the slider 98 of the seat catch 97 slides and is temporarily retracted into the catch body 99. When the seat hook 60 is fitted in the hook 99A, the slider 98 projects again and locks the seat hook 60.

With the seat hook 60 locked by the seat catch 97, the positioning land 65 which is integral with the proximal end of the rear leg 62 is fitted in the seat hook insertion hole 96. Since the rear end 65A abuts against a rear edge 96A of the seat hook insertion hole 96, the positioning land 65 prevents the seat 50 from moving in the rearward direction of the vehicle. Since the side surfaces 65C abut against side edges 96B of the seat hook insertion hole 96, the positioning land 65 prevents the seat 50 from moving in the widthwise direction of the vehicle. Therefore, the positioning land 65 positions the seat 50 in the front-and-rear directions and left-and-right directions (widthwise directions) of the vehicle.
The seat hook insertion hole 96 functions as a hole for locking the inserted seat hook 60 with the seat catch 97, and also as an engaging hole for engaging the positioning land 65.
Inasmuch as the seat 50 is positioned in the forward direction by the front teeth 58 and the rear teeth 59, there is no positioning land at the front leg 61, and a gap 68 is provided between the front leg 61 and a front edge 96C of the seat hook insertion hole 96.

According to the present embodiment, the positioning land 65 for positioning the seat 50 is integral with the seat hook 60, and the seat hook insertion hole 96 which is combined with the seat catch 97 is also used as an engaging hole for the positioning land 65. Consequently, the positioning land 65 as it positions the seat 50 is locked, together with the seat hook 60, by the seat catch 97. Even when a upward force T (see Fig. 10) tending to remove the seat 50 is applied to the rear portion of the seat 50, since the positioning land 65 is locked by the seat catch 97, the positioning land 65 is prevented from being removed from the seat hook insertion hole 96 without the need for ribs or the like on the seat bottom plate 54 to increase the rigidity of the seat bottom plate 54.

As shown in Fig. 9, in the case where the seat hook insertion hole 96 and the seat hook 60 are offset to one side of the central line C in the widthwise directions of the vehicle, the distance between the edge of the seat 50 on the other side in the widthwise directions of the vehicle and the seat hook insertion hole 96 is large, the seat 50 is liable to be lifted from the edge on the other side. According to the present embodiment, however, since the positioning land 65 is locked by the seat catch 97 combined with the seat hook insertion hole 96, the positioning land 65 is prevented from being removed from the seat hook insertion hole 96 even if the seat 50 is lifted from the other side.
Even with the seat hook insertion hole 96 and the seat hook 60 offset to one side of the central line C in the widthwise directions of the vehicle, as the positioning land 65 is prevented from being removed from the seat hook insertion hole 96, the seat catch 97 can be placed in a region where the distance between the rear portions of the seat rails 8 is small, resulting in an increased degree of freedom for layout.

A procedure for installing the seat 50 on the seat rails 8 will be described below.
As shown in Figs. 4, 5, 9, and 10, the seat 50 is slid forwardly on the seat rails 8 until the recess 50D in the front end of the seat 50 is fitted over the rear portion of the fuel tank 18, and the front teeth 58 and the rear teeth 59 of the seat bottom plate 54 engage the seat rail hook 84 and the frame-shaped hooks 87B, respectively, of the seat rails 8. At this time, since the guide walls 87A of the seat hook stays 85 keep the rear teeth 59 in proper positions in the widthwise directions of the vehicle, the seat 50 can easily be installed in position. As the seat 50 is positioned when the recess 50D is fitted over the rear portion of the fuel tank 18, it is easy to install the seat 50 in position.

Then, the rear seat 50B is pressed from above, inserting the seat hook 60 and the positioning land 65 into the seat hook insertion hole 96. The seat hook 60 is locked by the seat catch 97, thereby securing the seat 50 to the seat rails 8. At this time, since the seat 50 is positionally limited in the forward direction of the vehicle by the front teeth 58 and the rear teeth 59, the seat hook 60 can be locked by the seat catch 97 simply by pressing the rear seat 50B from above without the need for a strict positioning process.
On the front leg 61 side, the gap 68 is defined between the front leg 61 and the seat hook insertion hole 96. Since there is an enough clearance between the seat hook 60 including the positioning land 65 and the front edge 96C of the seat hook insertion hole 96, the positioning land 65 can easily be fitted in the seat hook insertion hole 96.

As shown in Fig. 9, the cap 32B of the reservoir tank 32 is disposed adjacent to the outer side of the left guide wall 87A below the seat 50. The guide wall 87A prevents the rear teeth 59 of the seat 50 from contacting the cap 32B.

According to the embodiment of the present invention, as described above, since the positioning land 65 integral with the seat hook 60 engages in the engaging hole which is provided as the seat hook insertion hole 96 on the side of the seat rails 8, the positioning land 65 is inserted, together with the seat hook 60, in the seat hook insertion hole 96 and locked by the seat catch 97. The positioning land 65 is thus prevented from being removed without the need for ribs or the like on the seat bottom plate 54. The positioning land 65 is prevented from being removed from the seat hook insertion hole 96 as the engaging hole without the need for an increase in the thickness of the seat bottom plate 54. The positioning land 65 also serves to reinforce the seat hook 60 for increased rigidity.

Even though the seat hook 60 and the seat catch 97 are offset to one of the left and right sides of the central line C, i.e., even though the seat 50 is liable to be lifted from the other of the left and right sides, the positioning land 65 is prevented from being removed from the seat hook insertion hole 96 without the need for an increase in the thickness of the seat bottom plate 54.
The assembled states of the catch body 99 and the cable 100 which are disposed below the upper cross member 91 can be inspected through the inspection window 95 which is defined centrally in the widthwise directions of the vehicle.

Since the rigidity of the seat hook 60 is increased by the reinforcing ribs 61A, 62A of the front leg 61 and the rear leg 62, the positioning land 65 is prevented from being removed from the seat hook insertion hole 96.
Furthermore, while the rear teeth 59 of the seat bottom plate 54 are being guided by the guide walls 87A that are contiguous to the rear portions of the outer sides, in the widthwise directions of the vehicle, of the frames of the frame-shaped stays 87, the seat bottom plate 54 can engage the frame-shaped stays 87, making it possible to install the seat 50 with ease.
Inasmuch as the cap 32B of the reservoir tank 32 is disposed on the outer side of the guide wall 87A, the guide wall 87A prevents the rear teeth 59 of the seat bottom plate 54 from contacting the cap 32B.

The above embodiment represents an aspect of the present invention, and the present invention is not limited to the above embodiment.
In the above embodiment, the positioning land 65 is integral with the rear leg 62 on the rear portion of the seat hook 60. The present invention is not limited to such a structure. The positioning land 65 may be integral with the front leg 61 on the front portion of the seat hook 60. According to such a modification, the seat 50 can be positioned in the forward direction by the positioning land held against the front edge 96C of the seat hook insertion hole 96, can also be positioned in the widthwise directions of the vehicle by the positioning land held against the side edges 96B of the seat hook insertion hole 96.
In the above embodiment, the saddle-type vehicle to which the present invention is applied is the motorcycle 1. However, the present invention is also applicable to three-wheeled vehicles, four-wheeled buggies, etc.

A structure around the exhaust pipes 15 of the motorcycle 1 will be described below.

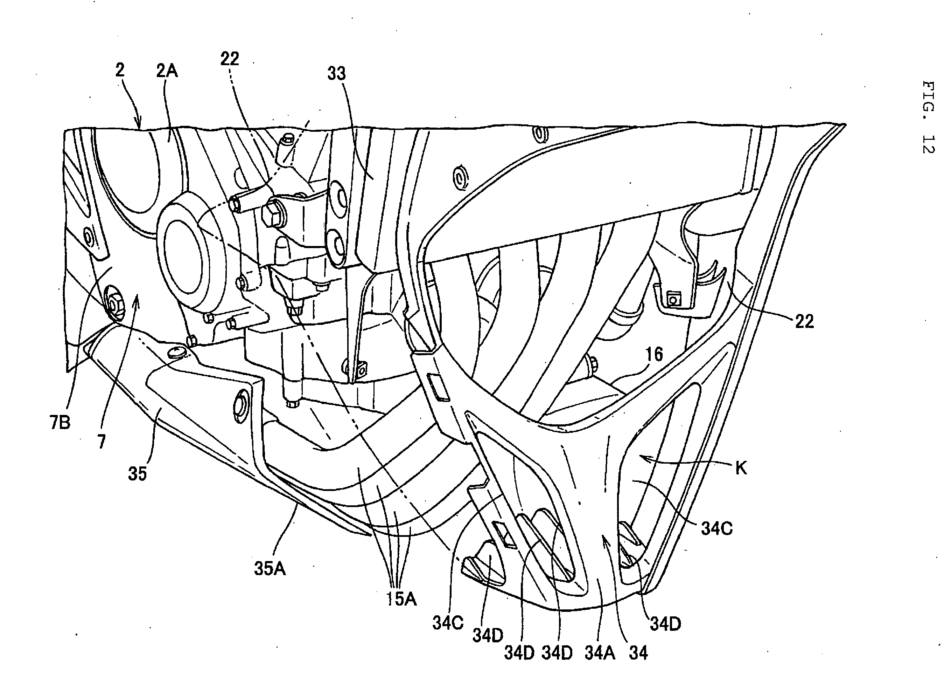

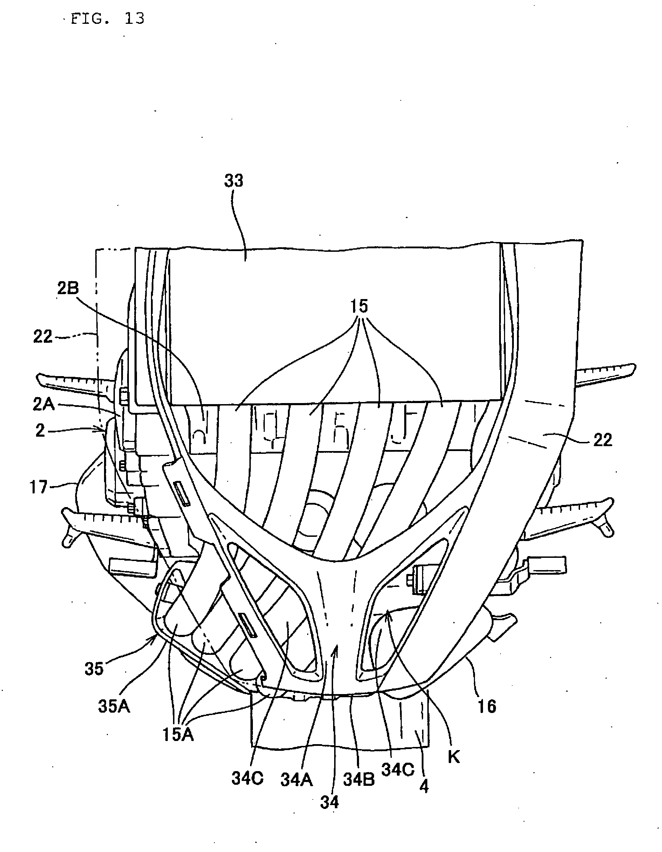

Fig. 11 is a right side elevational view of the motorcycle 1. Fig. 12 is a perspective view of the exhaust pipes 15 and neighboring parts as viewed from a viewpoint rightward and forward of the vehicle. Fig. 13 is a front elevational view of the exhaust pipes 15 and neighboring parts as viewed from a viewpoint forward of the vehicle. In Figs. 11 through 13, the right front side cowl 22 is indicated by the two-dot-and-dash lines.
The engine 2 is an in-line four-cylinder engine with four cylinders arrayed in the widthwise directions of the vehicle. The engine 2 includes cylinders 2B, which are slightly inclined forwardly, on the upper portion of a front portion of a crankcase 2A. The cylinders 2B have four corresponding exhaust ports defined in front surfaces thereof and arrayed at substantially equal intervals in the widthwise directions of the vehicle. The exhaust pipes 15 are connected respectively to the exhaust ports. The radiator 33 is disposed forwardly of the cylinders 2B.

The four exhaust pipes 15 extend downwardly from the exhaust ports as they are bent in the rightward direction of the vehicle, and have respective bent portions 15A put closely together below a front surface of the crankcase 2A. The exhaust pipes 15 are then bent rearwardly and pass below a right portion of the engine 2 before they are joined to the chamber 16. The chamber 16 is disposed below a left portion of the engine 2.
The engine 2 has a lower portion which, as viewed in a front elevation of Fig. 13, is progressively narrower downwardly and wider upwardly toward the crankcase 2A. The four exhaust pipes 15 are placed in a layout complementary to the shape of the lower portion of the engine 2. One of the exhaust pipes 15 which is closest to the center of the vehicle is in a lowermost position. Those exhaust pipes 15 which are placed more outwardly of the vehicle are in upper positions. Since the exhaust pipes 15 which are placed more outwardly of the vehicle are in upper positions, the bank angle of the motorcycle 1 is increased.

The engine 2 has its left and right sides covered with the front side cowls 22 which are connected to each other by a front inner cowl 34 that is positioned behind the front wheel 3. The front side cowls 22 and the front inner cowl 34 jointly define a space K positioned forwardly of the engine 2.
The front inner cowl 34 includes a front plate 34A which faces a rear portion of the front wheel 3 and a bottom plate 34B extending rearwardly from the lower edge of the front plate 34A. The front plate 34A has openings 34C defined therein for introducing running air into the space K. The bottom plate 34B has a plurality of upstanding plate-like ribs 34D extending in the front-and-rear directions of the vehicle and spaced in the widthwise directions of the vehicle. The ribs 34D function to reinforce the front inner cowl 34 and also function as air guide plates for guiding running air introduced from the openings 34C to the exhaust pipes 15 behind the ribs 34D.
The right front side cowl 22 has a lower rear edge 22A positioned forwardly of the bent portions 15A of the exhaust pipes 15, and hence does not cover side surfaces of the bent portions 15A.

The exhaust pipes 15 which extend rearwardly from the bent portions 15A are combined with a muffler cover 35 which cover right side surfaces of the exhaust pipes 15 below the crankcase 2A. The muffler cover 35 has a front edge 35A extending to a position behind the bent portions 15A, and hence does not cover the bent portions 15A.
Specifically, the rear edge 22A of the right front side cowl 22 and the front edge 35A of the muffler cover 35 are spaced from each other in the front-and-rear directions. The bent portions 15A of the respective exhaust pipes 15 are exposed outwardly, with their side surfaces not covered with the front side cowl 22 and the muffler cover 35. Therefore, the front side cowl 22 and the muffler cover 35 do not prevent the motorcycle 1 from banking at the bent portions 15A when the motorcycle 1 makes a turn, allowing the motorcycle 1 to have a large bank angle.

A structure around the front cowls 21 and the headlight 30 will be described below.

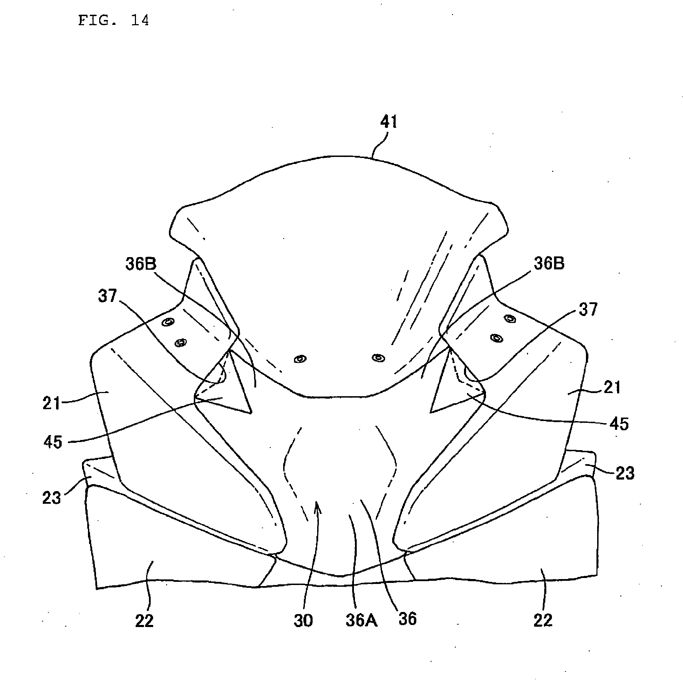

Fig. 14 is a front elevational view of a structure around the front cowls 21 and the headlight 30.
The headlight 30 is disposed centrally in the widthwise directions of the vehicle, and the left and right front cowls 21 are contiguous to the side edges of the headlight 30 and extend rearwardly while spreading in the widthwise directions of the vehicle. A wind screen 41 which extends rearwardly and upwardly is contiguous to an upper portion of the headlight 30 and upper portions of the left and right front cowls 21.

As shown in Figs. 1 and 14, the headlight 30 includes a lens 36 having a curved surface that blends into the surfaces of the front cowls 21. The lens 36 includes a front region 36A positioned centrally in the widthwise directions of the vehicle and extensions 36B extending rearwardly sideways from an upper portion of the front region 36A. As viewed in front elevation, the extensions 36B extend obliquely outwardly and upwardly in the widthwise directions of the vehicle.
The extensions 36B include respective cavities 45 defined in rear portions thereof by their surfaces which are recessed into the headlight 30. The cavities 45 are continuous from intermediate to rear portions of the extensions 36B in the front-and-rear directions, and have depths and widths that are progressively greater in the rearward direction. As viewed in front elevation, the cavities 45 have a substantially triangular profile.

The cavities 45 defined in the lens 36 of the headlight 30 provide air vent holes 37 defined between the front edges of the front cowls 21 which are contiguous to the extensions 36B and the rear portions of the extensions 36B. The air vent holes 37 communicate with the interior of the front cowls 21. Part of the running air applied to the front portion of the vehicle is introduced through the cavities 37 into the space within the front cowls 21.

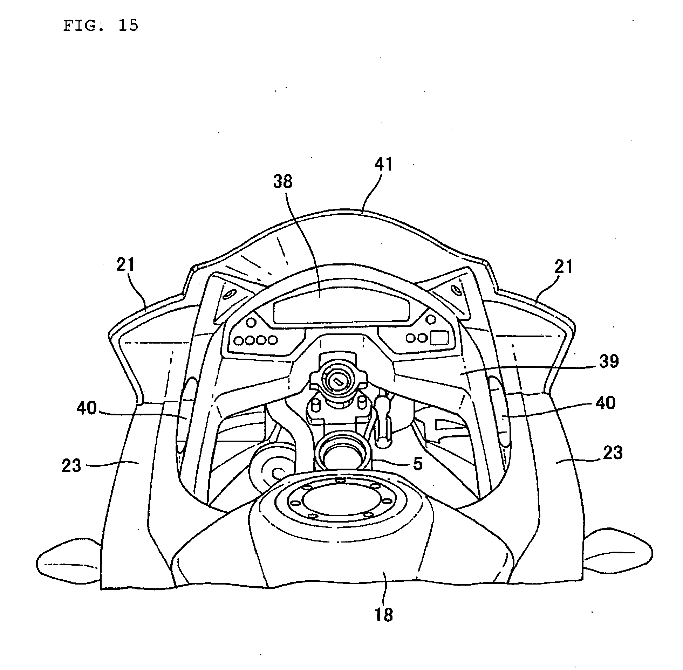

Fig. 15 is a perspective view of a front portion of the vehicle as viewed from a viewpoint rearward of the vehicle.
A meter 38 for indicating a speed, etc. is disposed between the front cowls 21 and the head pipe 5. The meter 38 has a peripheral edge covered with a meter cowl 39 contiguous to the inner edges of the upper cowls 23. The meter cowl 39 has openings 40 which communicate with the space within the front cowls 21. Part of the running air that is introduced from the air vent holes 37 near the headlight 30 is supplied through the openings 40 to an area behind front cowls 21 and the wind screen 41. The running air introduced from the air vent holes 37 near the headlight 30 is effective to reduce a negative pressure developed on the rider to make the rider feel comfortable.
1: Motorcycle (saddle-type vehicle)
2: Engine
8: Seat rail
32: Reservoir tank (radiator reservoir tank)
32B: Cap
50: Seat
52: Seat skin layer
53: Cushion
54: Seat bottom plate
59: Rear tooth (tooth)
60: Seat hook
61: Front leg
61A, 62A: Reinforcing rib
62: Rear leg
63: Joint
65: Positioning land
87: Frame-shaped stay
87A: Guide wall
90: Cross member
95: Inspection window
96: Seat hook insertion hole (engaging hole)
97: Seat catch
99: Catch body
100: Cable
C: Central line (widthwise central line)
F: Vehicle frame

## Claims

1. A rear structure for a saddle-type vehicle which comprises a seat (50) including a seat skin layer (52), a cushion (53), and a seat bottom plate (54), and a seat rail (8) disposable in a rear portion of a vehicle frame (F), for bearing a load from said seat (50), said seat bottom plate (54) including a seat hook (60) and a positioning land (65) which project downwardly, and said seat rail (8) including a seat hook insertion hole (96) for inserting said seat hook (60) therein, a seat catch (97) for locking said seat hook (60), and an engaging hole for engaging said positioning land (65),
**characterised in that** said positioning land (65) of said seat bottom plate (54) is integral with a front portion or rear portion of said seat hook (60), and said engaging hole is provided as said seat hook insertion hole (96) for said seat catch (97).

2. The rear structure for a saddle-type vehicle according to claim 1, wherein said seat rail (8) is provided as a pair of left and right seat rails (8, 8), said seat catch (97) is disposed on a cross member (90) extending between said left and right seat rails (8, 8); and
said seat hook (60) and said seat catch (97) are offset to one of left and right sides of a central line (C) in the widthwise directions of the vehicle.

3. The rear structure for a saddle-type vehicle according to any of the preceding claims, wherein said seat catch (97) is disposed beneath said cross member (90) and comprises a catch body (99) and a cable (100), and an inspection window (95) is provided centrally between the seat rails (8, 8) in the widthwise directions of the vehicle.

4. The rear structure for a saddle-type vehicle according to any of the preceding claims, wherein said seat hook (60) comprises a front leg (61), a rear leg (62), and a joint (63) interconnecting said front leg (61) and said rear leg (62), said front leg (61) and said rear leg (62) including reinforcing ribs (61A, 62A), respectively, which are integral with said rear bottom plate (54).

5. The rear structure for a saddle-type vehicle according to any of the preceding claims, wherein said seat bottom plate (54) includes a pair of left and right teeth (59, 59) extending in front-and-rear directions, and said left and right seat rails (8, 8) include a pair of left and right frame-shaped stays (87, 87) which are open in the front-and-rear directions, said teeth (59, 59) being engaged by said left and right frame-shaped stays (87, 87); and
said frame-shaped stays (87) include guide walls (87A, 87A) contiguous to rear portions of outer side surfaces of frames of said left and right frame-shaped stays (87, 87) and extending in the front-and-rear directions.

6. The rear structure for a saddle-type vehicle according to any of the preceding claims, wherein the saddle-type vehicle (1) includes an engine (2) having a radiator reservoir tank (32) disposed on an outer side of one of said seat rails (8, 8), and said radiator reservoir tank (32) includes a cap (32B) disposed on an outer side of one of said guide walls (87A).

## Patentansprüche

1. Rückseitenstruktur für ein Sattelfahrzeug mit einem Sitz (50), der eine Sitzlederschicht (52), ein Polster (53) sowie eine Sitzbodenplatte (54) aufweist, und mit einer Sitzschiene (8), die in einem hinteren Abschnitt eines Fahrzeugrahmens (F) anbringbar ist, um eine Last von dem Sitz (50) zu tragen, wobei die Sitzbodenplatte (54) einen Sitzhaken (60) und einen Positionierungssteg (65) aufweist, welche nach unten ragen, und wobei die Sitzschiene (8) eine Einführöffnung (96) für den Sitzhaken zum Einführen des Sitzhakens (60) in diese, eine Sitzarretierung (97) zum Verriegeln des Sitzhakens (60) sowie eine Eingriffsöffnung zum Eingreifen des Positionierungssteges (65) aufweist,
**dadurch gekennzeichnet, dass** der Positionierungssteg (65) der Sitzbodenplatte (54) einstückig mit einem vorderen Abschnitt oder hinteren Abschnitt des Sitzhakens (60) ausgebildet ist und die Eingriffsöffnung als die Sitzhaken-Einführöffnung (96) für die Sitzarretierung (97) vorgesehen ist.

2. Rückseitenstruktur für ein Sattelfahrzeug gemäß Anspruch 1, wobei die Sitzschiene (8) als ein Paar linker und rechter Sitzschienen (8, 8) vorgesehen ist, wobei die Sitzarretierung (97) auf einer Querstrebe (90) angebracht ist, welche sich zwischen den linken und rechten Sitzschienen (8, 8) erstreckt; und
der Sitzhaken (60) und die Sitzarretierung (97) zu einer der linken oder rechten Seite einer Mittellinie (C) in Breitenrichtung des Fahrzeuges versetzt sind.

3. Rückseitenstruktur für ein Sattelfahrzeug gemäß einem der vorhergehenden Ansprüche, wobei die Sitzarretierung (97) unter der Querstrebe (90) angebracht ist und einen Arretierungskörper (99) und ein Seil (100) umfasst, und wobei ein Prüffenster (95) mittig zwischen den Sitzschienen (8, 8) in Breitenrichtung des Fahrzeuges vorgesehen ist.

4. Rückseitenstruktur für ein Sattelfahrzeug gemäß einem der vorhergehenden Ansprüche, wobei der Sitzhaken (60) einen vorderen Schenkel (61), einen hinteren Schenkel (62) und ein den vorderen Schenkel (61) und den hinteren Schenkel (62) miteinander verbindendes Gelenk (63) umfasst, wobei der vordere Schenkel (61) und der hintere Schenkel (62) jeweils Verstärkungsrippen (61A, 62A) aufweisen, welche einstückig mit der hinteren Bodenplatte (54) ausgebildet sind.

5. Rückseitenstruktur für ein Sattelfahrzeug gemäß einem der vorhergehenden Ansprüche, wobei die Sitzbodenplatte (54) ein Paar sich in Richtung nach vorne und hinten erstreckender, linker und rechter Zähne (59, 59) aufweist, und wobei die linken und rechten Sitzschienen (8, 8) ein Paar linker und rechter rahmenartiger Stützen (87, 87) aufweisen, die in Richtung nach vorne und hinten offen sind, wobei die Zähne (59, 59) in Eingriff mit den linken und rechten rahmenartigen Stützen (87, 87) stehen; und
die rahmenartigen Stützen (87) Führungswände (87A, 87A) aufweisen, die an hintere Abschnitte von äußeren Seitenflächen von Rahmen der linken und rechten rahmenartigen Stützen (87, 87) angrenzen und sich in Richtung nach vorne und hinten erstrecken.

6. Rückseitenstruktur für ein Sattelfahrzeug gemäß einem der vorhergehenden Ansprüche, wobei das Sattelfahrzeug (1) einen Motor (2) mit einem Kühlerbehälterkasten (32) aufweist, der an einer Außenseite von einer der Sitzschienen (8, 8) angebracht ist, und der Kühlerbehälterkasten (32) eine Kappe (32B) aufweist, die an einer Außenseite von einer der Führungswände (87A) angebracht ist.

## Revendications

1. Structure arrière pour un véhicule de type à selle qui comprend un siège (50) comprenant une couche de revêtement de siège (52), un coussin (53) et une plaque inférieure de siège (54) et un rail de siège (8) pouvant être disposé dans une partie arrière d'un cadre de véhicule (F), pour supporter une charge dudit siège (50), ladite plaque inférieure de siège (54) comprenant un crochet de siège (60) et un méplat de positionnement (65) qui fait saillie vers le bas, et ledit rail de siège (8) comprenant un trou d'insertion de crochet de siège (96) pour y insérer ledit crochet de siège (60), un dispositif d'arrêt de siège (97) pour verrouiller ledit crochet de siège (60), et un trou de mise en prise pour mettre en prise ledit méplat de positionnement (65),
**caractérisée en ce que** :
ledit méplat de positionnement (65) de ladite plaque inférieure de selle (54) est solidaire avec une partie avant ou une partie arrière dudit crochet de siège (60) et ledit trou de mise en prise est prévu sous la forme dudit trou d'insertion de crochet de siège (96) pour ledit dispositif d'arrêt de siège (97).

2. Structure arrière pour un véhicule de type à selle selon la revendication 1, dans laquelle ledit rail de siège (8) est prévu sous la forme d'une paire de rails de siège gauche et droit (8, 8), ledit dispositif d'arrêt de siège (97) est disposé sur une traverse (90) s'étendant entre lesdits rails de siège gauche et droit (8, 8) ; et
ledit crochet de siège (60) et ledit dispositif d'arrêt de siège (97) sont décalés vers l'un des côtés gauche et droit d'une ligne centrale (C) dans les directions de largeur du véhicule.

3. Structure arrière pour un véhicule de type à selle selon l'une quelconque des revendications précédentes, dans laquelle ledit dispositif d'arrêt de siège (97) est disposé au-dessous de ladite traverse (90) et comprend un corps de dispositif d'arrêt (99) et un câble (100), et une fenêtre de contrôle (95) est prévue de manière centrale entre les rails de siège (8, 8) dans les directions de largeur du véhicule.

4. Structure arrière pour un véhicule de type à selle selon l'une quelconque des revendications précédentes, dans laquelle ledit crochet de siège (60) comprend une patte avant (61), une patte arrière (62) et un joint (63) interconnectant ladite patte avant (61) et ladite patte arrière (62), ladite patte avant (61) et ladite patte arrière (62) comprenant des nervures de renforcement (61A, 62A), respectivement, qui sont solidaires avec ladite plaque inférieure arrière (54).

5. Structure arrière pour un véhicule de type à selle selon l'une quelconque des revendications précédentes, dans laquelle ladite plaque inférieure de siège (54) comprend une paire de dents gauche et droite (59, 59) s'étendant dans des directions vers l'avant et vers l'arrière, et lesdits rails de siège gauche et droit (8, 8) comprennent une paire de supports en forme de cadre gauche et droit (87, 87) qui sont ouverts dans les directions vers l'avant et vers l'arrière, lesdites dents (59, 59) étant mises en prise par lesdits supports en forme de cadre gauche et droit (87, 87) ; et
lesdits supports en forme de cadre (87) comprennent des parois de guidage (87A, 87A) contiguës à des parties arrière des surfaces latérales externes de cadres desdits supports en forme de cadre gauche et droit (87, 87) et s'étendant dans les directions vers l'avant et vers l'arrière.

6. Structure arrière pour un véhicule de type à selle selon l'une quelconque des revendications précédentes, dans laquelle le véhicule de type à selle (1) comprend un moteur (2) ayant un réservoir de radiateur (32) disposé sur un côté externe de l'un desdits rails de siège (8, 8), et ledit réservoir de radiateur (32) comprend un capuchon (32B) disposé sur un côté externe de l'une desdites parois de guidage (87A).
